# FASCICULE DE BREVET EUROPEEN

(11) **EP 1 889 345 B1**
(45) Date de publication et mention de la délivrance du brevet: **07.11.2012**
(21) Numéro de dépôt: 06764666.1
(22) Date de dépôt: 19.05.2006
(51) Int. Cl.: H02G 3/04

(54) **DISPOSITIF DE SUPPORT DE CABLES ELECTRIQUES OU AUTRES CONDUITS**
HILFSEINRICHTUNG FÜR ELEKTRISCHE KABEL ODER ANDERE KANÄLE
SUPPORT DEVICE FOR ELECTRIC CABLES OR OTHER CONDUITS

(30) Priorité: 27.05.2005 FR 0505344
(43) Date de publication de la demande: 20.02.2008
(73) Titulaire: Ebo Systems, 54920 Villers La Montagne (FR)
(72) Inventeur: LEGRAND, Christophe, F-57390 Audun Le Tiche (FR); GUTHAPPEL, Laurent, F-57000 Metz (FR); PREVOT, Hervé, F-54620 Han Devant Pierrepont (FR); CHAUZU, Franck, F-67210 Obernai (FR)
(74) Mandataire: Brungard, Yves Francois
(86) Numéro de dépôt international: PCT/FR2006/001173
(87) Numéro de publication internationale: WO 2006/125907

(56) Documents cités:
- GB-A- 2 265 764
- US-A- 5 470 021

## Description

La présente invention concerne un dispositif de support de câbles électriques ou autres conduits, tel que communément utilisé dans des installations industrielles, pour guider et supporter des câbles électriques ou conduits de transport de fluides, généralement sur de grandes longueurs, et permettre de regrouper dans un même support plusieurs câbles ou conduits disposés parallèlement.

Ces dispositifs, réalisés classiquement par assemblage bout à bout de plusieurs éléments constitutifs, sont généralement appelés échelles à câbles ou chemins de câbles, et ont une section de forme générale en "U", à l'intérieur duquel les câbles sont posés et éventuellement fixés.

Les chemins de câbles sont généralement constitués par un profilé de section en forme de "U" dont le fond est une plaque continue éventuellement perforée. De tels chemins de câbles peuvent être en particulier réalisés en matériau composite, par exemple par moulage ou par profilage en continu, selon le procédé connu appelé pultrusion.

Les échelles à câbles comportent deux longerons parallèles, constituant les ailes du "U", reliées par des échelons ou barreaux, qui forment le fond du "U", sur lesquels reposent les câbles. Les longerons assurent la rigidité de l'échelle qui, en position horizontale doit supporter le poids des câbles sans flexion excessive, l'échelle n'étant elle-même fixée à la structure de l'installation ou du bâtiment qu'en des points espacés de plusieurs mètres.

Un avantage de ce type de réalisation est qu'il permet une meilleure ventilation des câbles et peut aussi faciliter les entrées et sorties de câbles. Cette conception permet également de combiner des barreaux de différentes longueurs et des longerons de différentes formes, pour proposer une large gamme d'échelles de différentes largeurs ou formes.

On connaît de tels systèmes notamment par FR-A-2709528, EP-0119670, EP-0873477 et EP-0542368, qui décrivent des systèmes d'échelles formées de montants et barreaux profilés, dans lesquels les barreaux sont maintenus sur les montants par divers systèmes de liaison, nécessitant des pièces d'assemblage complémentaires, tel que des assemblages par vissage, ou encore par soudage ou collage des barreaux sur les longerons. Quel que soit ce mode d'assemblage, il nécessite un temps de main d'oeuvre important, et les accessoires éventuels d'assemblage en grève le coût.

Le document US 5,470,002 montre un dispositif de support de câbles ou conduits, comportant deux longerons parallèles reliés par des barreaux, les longerons étant en matériau composite. Le document GB2 265 764 A montre aussi un dispositif de même structure, mais avec des éléments métalliques.

Par ailleurs, l'assemblage des longerons bout à bout pour former des grandes longueurs de chemin de câbles est généralement réalisé par des éclisses, sous forme de pièces rapportées fixées aux extrémités des longerons. La mise en place de ces éclisses nécessite aussi un temps de main d'oeuvre important, et de plus le serrage des éclisses sur les longerons peut conduire à des assemblages rigides, causant des problèmes de dilatation lorsque les éléments de chemins de câble sont assemblés pour former de grandes longueurs.

La présente invention a pour but de résoudre les divers problèmes exposés ci-dessus, et vise en particulier à permettre de diminuer la quantité de matière nécessaire en optimisant la résistance mécanique des longerons. Elle vise aussi à faciliter la mise en oeuvre des supports de câbles et la mise en place des câbles sur ces supports, en simplifiant notamment les entrées ou sorties des câbles par rapport au dit support.

L'invention vise aussi à diminuer les coûts de revient en facilitant l'assemblage des barreaux sur les longerons, sans utilisation d'accessoires d'assemblage ni nécessité d'ouvraison des longerons. Elle vise encore à faciliter la mise en place lors du montage sur site, en s'affranchissant des problèmes de connexion, tels que problèmes de fixation et de dilatation, etc.

L'invention a aussi pour but d'accroître la modularité de fabrication de ces dispositifs, en permettant de nombreuses variantes dimensionnelles, tout en n'utilisant qu'un nombre limité d'éléments de base, et donc d'outillage de fabrication, ces éléments étant eux-mêmes réalisés de manière la plus simple et économique possible.

Avec ces objectifs en vue, l'invention a pour objet un dispositif de support de câbles ou conduits tel que défini dans les revendications annexées.

Dans un mode de réalisation, le dispositif de support comporte deux longerons parallèles reliés par des éléments de liaisons, qui constituent généralement les éléments sur lesquels reposent les câbles, tels que couramment des barreaux, caractérisé en ce que les longerons sont en matériau composite moulé et comprennent une âme qui comporte des éléments de renfort ménageant entre eux des zones de voile mince évidables ou des zones évidées, où ledit voile mince a été supprimé, comme on le verra par la suite, pour former des trous de plus ou moins grande dimension. Ces trous peuvent servir de passages pour faire entrer ou sortir un câble sur les côtés d'un chemin de câble, mais peuvent aussi servir pour l'assemblage des longerons entre eux, ou la fixation sur ces longerons de divers éléments, tels que des moyens d'accrochage par exemple, pour fixer le support de câble sur une superstructure, ou pour fixer divers accessoires sur les longerons.

Les longerons ont une section de forme générale rectangulaire allongée, du fait que leur épaisseur est relativement faible par rapport à leur hauteur. Par exemple, à titre simplement indicatif, les longerons peuvent avoir une longueur de plusieurs mètres, typiquement 3 m, pour une hauteur de 50 à 200 mm et une épaisseur de l'ordre de 10 à 30 mm.

Selon une disposition particulière, les longerons ont une section, par exemple de forme générale en I, l'âme étant située entre deux semelles reliées par des éléments de renfort adaptés entre lesquels sont ménagées les zones de voile mince. Les zones de voile mince, d'une épaisseur qui peut n'être que de quelques dixièmes de millimètres, peuvent être facilement perforées localement, lors du montage sur site du dispositif de chemin de câbles, pour former des zones évidées permettant par exemple la sortie de câbles sur le côté du chemin de câbles, à travers les longerons.

Selon un mode de réalisation particulier, le voile mince peut être totalement supprimé dès la fabrication, de manière à ne laisser subsister entre les semelles des longerons que les éléments de renfort, disposés en croisillons, barreaux parallèles, etc., les formes et dispositions des éléments de renfort pouvant être adaptées selon les besoins en termes de résistance mécanique et aussi de design. Les ouvertures ainsi ménagées dans les longerons permettent d'en réduire le poids sans réduire sensiblement leur résistance mécanique. De plus, elles sont favorables à une ventilation du chemin de câbles, même dans le cas par exemple où le chemin de câbles est recouvert par un couvercle de protection fermé.

Le matériau composite formant les longerons peut être un matériau constitué par une résine, thermoplastique ou thermodurcissable, armée de fibres minérales, notamment de fibres de verre, ou de fibres synthétiques ou naturelles.

Les éléments de liaisons sont aussi préférentiellement réalisés en matière composite thermodurcissable armée de fibres. Selon une disposition préférentielle, ils comportent des barreaux dont les extrémités sont insérées dans des trous ménagés dans les longerons, et encore préférentiellement les extrémités des barreaux sont verrouillées dans les trous par déformation élastique des dites extrémités.

Les barreaux peuvent notamment être formés à partir de tubes ou barres pultrudés, c'est à dire formés en continu en étant armés de fils longitudinaux de fibre minérale continue, selon la technique de pultrusion. La longueur des barreaux, qui détermine la largeur du chemin de câbles, pourra typiquement être de 50 mm à 1 m, généralement de quelques centaines de mm, et leur section de 6 à 8 mm de diamètre jusqu'à des sections de forme rectangulaire ou carrée de 40 X 40 mm. Les barreaux sont typiquement répartis sur la longueur des longerons, avec un entraxe de 100 à 150 mm, toutes ces valeurs n'étant nullement limitatives de l'invention.

Le maintien des barreaux sur les longerons est préférentiellement aussi réalisé par clipsage des extrémités des barreaux dans les trous des longerons, conformés à cet effet lors de la phase de moulage, de manière à présenter des crans adaptés pour s'engager avec des encoches réalisées sur les extrémités des barreaux. A cette fin, les extrémités des barreaux sont fendues selon la direction axiale, pour autoriser une déformation élastique lorsque les extrémités des barreaux doivent passer entre les crans des trous, avant que les encoches ne viennent s'y ancrer.

Préférentiellement, les longerons sont moulés d'une pièce par compression selon la technique connue dite de « sheet moulding compound » ou encore « SMC », utilisant des feuilles ou bandes préfabriquées en matière plastique renforcée de fibres, par exemple en polyester renforcé de fibres courtes de 10 à 40 mm, qui sont placées dans un moule de manière adaptée en fonction des épaisseurs à obtenir, puis chauffées et mises en forme par compression dans le moule. Cette technique est utilisée pour former les longerons à plat, ce qui permet de leur conférer directement un certain nombre de fonctionnalités, comme on va le voir ensuite, sans besoin d'ouvraison, usinages ou autres interventions de préparation avant assemblage avec les barreaux, les zones de voile mince, prévues pour constituer par rupture les ouvertures ou les divers trous requis dans les longerons, étant formés directement lors du moulage.

En particulier, les trous destinés à recevoir les extrémités des barreaux sont formés directement lors du moulage, et ne nécessitent aucune opération de reprise. Des formes spécifiques de ces trous, adaptées particulièrement pour faciliter l'insertion et le maintien des barreaux, peuvent ainsi être réalisées directement par moulage. Du fait de la technique de moulage « SMC », il subsiste nécessairement dans chaque trou une peau ou voile de matière obstruant temporairement le trou, mais l'épaisseur de ce voile peut être suffisamment réduite, par exemple 0,1 mm, pour être déchiré automatiquement lors de l'insertion des barreaux, comme on le verra par la suite.

De même, les autres trous ou ouvertures requis dans les longerons pourront être obtenus en rompant aisément le voile mince aux endroits désirés.

Selon une autre disposition préférentielle, les extrémités des longerons sont conformées, également directement par moulage, pour présenter des moyens d'éclissage permettant l'assemblage des longerons bout à bout, par chevauchement, lors de l'installation d'un chemin de câbles formé de plusieurs éléments selon l'invention. Ces moyens d'éclissage comprennent en particulier une patte d'éclissage prolongeant l'âme du longeron au-delà de l'extrémité des semelles, et agencée pour s'insérer entre les semelles et contre la patte d'éclissage d'un longeron adjacent. Des organes d'assemblage sont prévus pour maintenir les dites pattes l'une contre l'autre, avec possibilité de déplacement relatif selon la direction longitudinale. Chaque patte d'éclissage comporte au moins un bossage et/ou une lumière oblongue, le bossage de la patte d'un longeron étant agencé pour s'insérer dans la lumière de la patte d'éclissage du longeron adjacent, avec un jeu longitudinal autorisant un déplacement relatif des longerons. L'épaisseur du bossage est légèrement supérieure à l'épaisseur de la patte, et un boulon passant dans un trou réalisé dans le bossage est serré sur ce dernier, laissant une possibilité de coulissement du bossage dans la lumière, même avec un couple de serrage du boulon relativement important.

D'autres caractéristiques et avantages apparaîtront dans la description qui va être faite d'un exemple de réalisation d'un chemin de câbles conforme à l'invention et de quelques variantes.

On se reportera aux dessins annexés dans lesquels :
- la figure 1 est une vue en perspective d'un élément du chemin de câbles,
- la figure 2 est une vue de détail de l'extrémité d'un longeron du chemin de câbles,
- la figure 3 est une vue d'un barreau du chemin de câbles,
- les figures 4 et 5 sont des vues de détail illustrant l'assemblage d'un barreau sur un longeron, respectivement avant et après assemblage,
- la figure 6 est une vue de détail montrant l'éclissage de deux longerons bout à bout,
- la figure 7 est une vue en coupe selon la ligne VII-VII de la figure 6,
- les figures 8, 9 et 10 illustrent des variantes de réalisation du chemin de câbles selon l'invention.

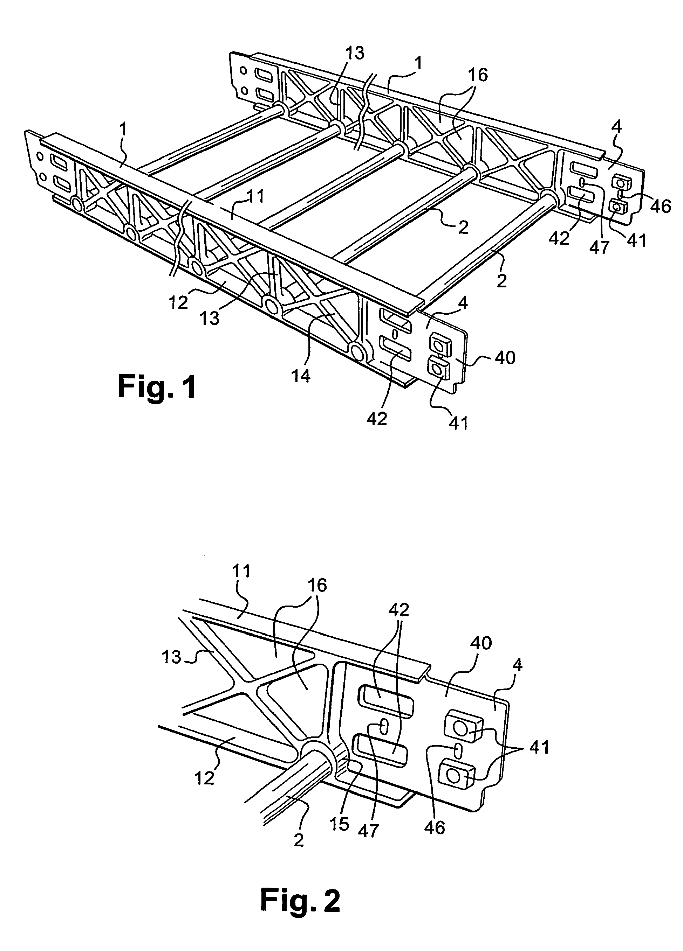

L'élément de chemin de câbles représenté figure 1 comporte deux longerons 1 reliés par une pluralité de barreaux 2, espacés par exemple de 100 mm.

Chaque longeron à une section en I, s'inscrivant plus généralement dans un rectangle allongé dont la longueur constitue la hauteur du longeron, typiquement de 50 à 100 mm ou plus, et comportant une semelle supérieure 11 et une semelle inférieure 12, reliées par des barres verticales 13 et des croisillons 14 de renfort, qui constituent l'âme du I. On notera que dans cet exemple les espaces 16 entre lesdits croisillons sont entièrement dégagés, mais ils pourraient également contenir un voile mince de matière. En effet, un tel voile résulte nécessairement du procédé de fabrication « SMC », ainsi que cela est bien connu, car il n'est pratiquement pas possible d'éliminer totalement un tel voile sous presse lors du moulage, même avec de fortes pressions de moulage. Par contre, l'épaisseur de ce voile peut être suffisamment réduite pour permettre de l'éliminer facilement après démoulage et obtenir ainsi les ouvertures représentées entre les barres 13 et croisillons 14. On notera encore que le procédé de moulage « SMC » permet de disposer localement de surépaisseurs, permettant ainsi d'adapter au mieux les formes des renforts et du longeron dans son ensemble, en fonction des caractéristiques mécaniques et esthétiques souhaitées.

A proximité de la semelle inférieure 12, des trous 3 sont formés dans des renflements 15 de matière, pour recevoir les extrémités 21 des barreaux 2. Les extrémités 21 des barreaux comportent une fente longitudinale 22 qui s'étend sur une distance suffisante pour permettre aux deux parties 23 situées de chaque côté de la fente de se rapprocher en fléchissant sans risque de rupture. Deux rainures transversales 24 sont également réalisées sur les dites parties.

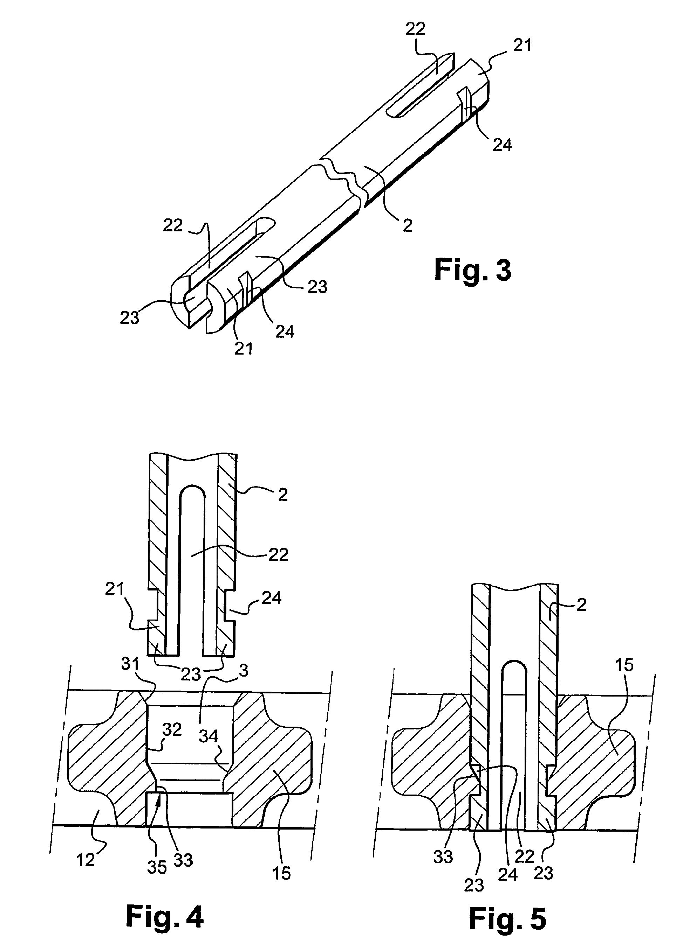

Les trous 3 comportent successivement : un chanfrein conique 31 permettant de centrer l'extrémité 21 du barreau lors de son montage, un alésage sensiblement cylindrique 32, de section correspondante à celle du barreau 2, deux crans 33 formés dans le trou 3, diamétralement opposés et de forme adaptée, en particulier présentant une zone d'entrée chanfreinée 34, pour permettre d'enfoncer l'extrémité du barreau dans le trou jusqu'à ce que les rainures 24 s'engagent élastiquement avec les crans 33, comme illustré figure 5. On notera que, lors du moulage, une pellicule subsiste nécessairement entre les deux parties du moule formant le trou 3. Pour des raisons de démoulage, le plan de joint du moule est situé au niveau de la face 35 arrière des crans 33, et c'est donc à ce niveau que subsiste la dite pellicule. Toutefois, comme la dimension du trou est relativement petite, l'épaisseur de la pellicule subsistante peut être aussi très faible, et elle peut être rompue aisément, lors de l'enfoncement du barreau dans le trou.

En fonction de la forme et de la dimension des sections des barreaux, les formes et dimensions du trou pourront aussi être adaptées, de même que celles des fentes et rainures de l'extrémité des barreaux. Par exemple, on pourrait aussi former un cran périphérique continu dans le trou et réaliser les fentes en croix pour conférer à l'extrémité du barreau une déformabilité plus importante pour pouvoir passer dans un tel cran.

Bien qu'on ait décrit ci-dessus la mise en place d'un seul barreau, on comprendra que, dans la pratique, tous les barreaux d'un élément du chemin de câbles sont insérés simultanément sur un même longeron au moyen d'une machine d'assemblage, et, au besoin, on pourra utiliser en complément des gabarits de centrage pour centrer les extrémités des barreaux sur leurs trous respectifs.

Pour conforter la tenue de l'assemblage des barreaux sur les longerons, on pourra aussi, après assemblage, insérer des bouchons dans les extrémités des barreaux, pour appliquer en serrage les parties d'extrémités 23 contre la paroi interne du trou 3.

A leurs extrémités, les longerons 1 comportent des pattes d'éclissages 4, formées d'une pièce par moulage avec l'âme et les semelles 11, 12 du longeron.

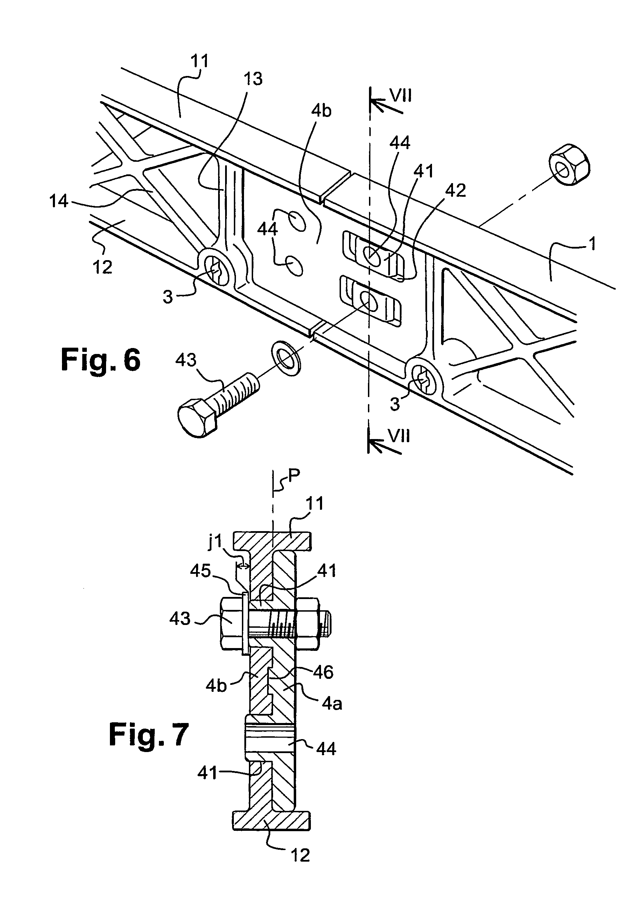

Les pattes d'éclissages sont conformées de manière à pouvoir être assemblées l'une contre l'autre pour la liaison bout à bout de deux longerons, comme illustré figures 6 et 7, un jeu j étant ménagé entre les extrémités des semelles pour autoriser les dilatations éventuelles. Chaque patte à une face 40 qui est situé dans un plan médian P du longeron. Comme on le voit bien figure 1, les faces 40 des deux pattes d'un même longeron sont situées respectivement vers l'intérieur et vers l'extérieur du chemin de câbles, pour assurer le bon alignement des longerons dans le sens transversal.

La hauteur des pattes 4 est égale à la distance entre les semelles 11, 12, soit la hauteur de l'âme du I constituant le longeron, de manière à assurer le bon alignement en hauteur des longerons adjacents. De plus, chaque patte 4 comporte, sur sa face 40, deux bossages 41 de forme rectangulaire et deux lumières 42 également rectangulaires et de même largeur que les bossages mais de longueur supérieure à celle des bossages, de manière que, comme on le voit figure 6, les bossages 41 de la patte d'éclissage 4a d'un longeron pénètrent dans les lumières 42 de la patte d'éclissage 4b de l'autre longeron lorsque les deux dites pattes d'éclissages 4a, 4b sont placées avec leurs faces 40 l'une contre l'autre. Le jeu longitudinal existant entre les bossages et les lumières permet un déplacement relatif propre à absorber les effets des dilatations longitudinales des longerons.

Le maintien de l'assemblage est réalisé au moyen de boulons 43 qui passent dans des trous 44 percés dans les bossages, et une rondelle 45 ou similaire est prévue débordante sur les côtés des lumières 42 pour maintenir les pattes l'une contre l'autre. L'épaisseur des bossages 41 est cependant légèrement supérieure à l'épaisseur des pattes 4, de sorte que les boulons sont serrés sur les bossages mais sans bloquer une patte contre l'autre, en laissant un faible jeu j1 juste suffisant pour permettre un coulissement longitudinal de l'une sur l'autre pour absorber les effets des dilatations.

Pour faciliter cependant un bon positionnement des longerons lors de l'assemblage des éléments de chemin de câbles sur site, des repères de positionnement, un repère en relief 46, formant une sorte d'ergot, et un repère en creux 47, sont prévus sur les faces 40 des pattes, le repère en relief 46 de la patte 4a d'un longeron s'engageant avec le repère en creux 47 de la patte 4b de l'autre longeron. Les dimensions de ces repères sont prévues suffisantes pour que leur engagement respectif soit sensible lors du montage, mais suffisamment petites aussi pour pouvoir se dégager l'un de l'autre par cisaillement en cas d'effort important provoqué par exemple par les effets de dilatations longitudinales des longerons.

On notera incidemment que, comme on le voit sur la figure 1, les deux longerons sont identiques, ce qui permet d'utiliser les mêmes longerons pour les deux côtés du chemin de câbles, après un simple retournement qui reste nécessaire pour orienter correctement les trous 3 avec leur chanfrein 31 vers les barreaux.

On notera aussi que si, dans l'exemple présenté, les extrémités d'un même longeron sont symétriques par rapport à un axe médian, cette disposition n'est cependant pas nécessaire. On pourrait par exemple, sur chaque longeron, avoir une patte 4 qui ne comporterait que un ou des bossages 41, et l'autre patte ne comporterait que une ou des lumières 42, ce qui permettrait également l'assemblage par éclissage selon l'invention.

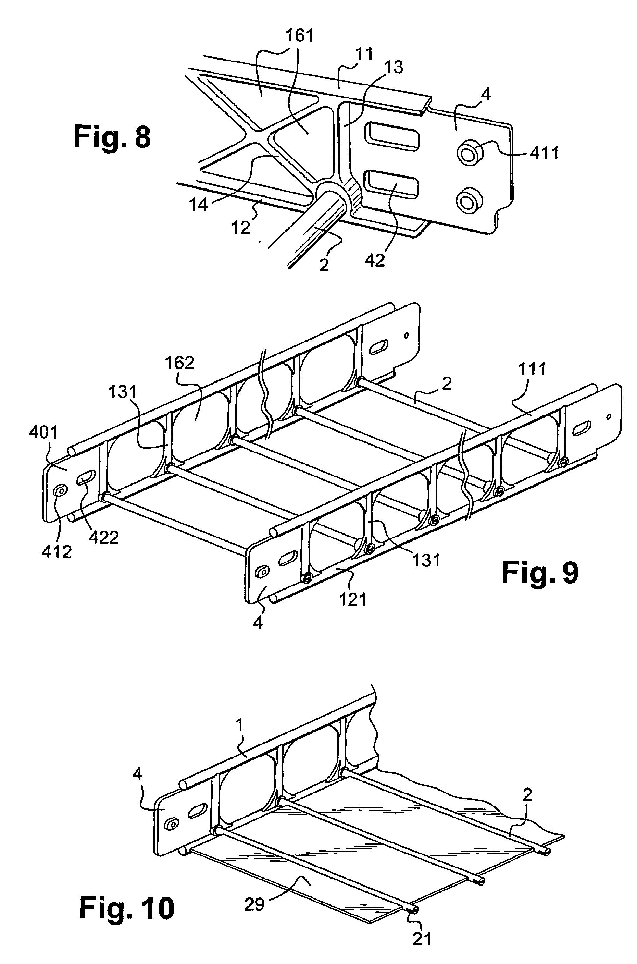

La figure 8 illustre une variante dans laquelle les bossages rectangulaires 41 sont remplacés par des bossages cylindriques 411, et les voiles minces 161 de matière sont conservés entre les barres 13 et croisillons 14 de renfort.

La figure 9 illustre une autre variante, de construction plus légère, dans laquelle les formes des longerons sont modifiées, leurs "semelles" 111 et 121 étant alors de section circulaire et reliées par de simples barres verticales 131 déterminant entre elles des ouvertures 162 en forme de rectangles aux coins arrondis. Les pattes 401 ne comportant ici chacune qu'un seul bossage 412 et une seule lumière 422.

Ces variantes sont présentées pour illustrer seulement quelques-unes unes des nombreuses possibilités de réalisation d'un dispositif de support de câbles conforme à l'invention, sans sortir du cadre de la protection déterminé par les revendications.

En particulier, les barreaux peuvent aussi se présenter sous la forme d'un ensemble continu. Sur la figure 10, qui illustre une telle disposition, on a représenté le chemin de câbles avec un des longerons enlevé, pour une meilleure compréhension. L'ensemble des barreaux, formés d'une pièce avec des éléments de panneaux reliant les barreaux, constitue une plaque 29 formant le fond du chemin de câbles, et dont seulement des parties, ayant la forme des extrémités 21 des barreaux 2, dépassent latéralement pour venir s'engager dans les trous des longerons.

Egalement, les longerons pourraient aussi être réalisés en matière thermoplastique renforcé et moulés par compression. Les longerons pourraient aussi être fabriqués par injection ou injection-compression.

## Revendications

1. Dispositif de support de câbles ou conduits, comportant deux longerons (1) parallèles reliés par des barreaux (2), **caractérisé en ce que** les longerons (1) sont en matériau composite moulé et comportent des trous (3) dans lesquels les extrémités (21) des barreaux (2) sont insérées et verrouillées par déformation élastique des dites extrémités.

2. Dispositif selon la revendication 1, **caractérisé en ce que** les barreaux (2) sont réalisés en matière composite thermodurcissable armée de fibres.

3. Dispositif selon la revendication 1, **caractérisé en ce que** le maintien des barreaux (2) sur les longerons (1) est réalisé par clipsage des extrémités (21) des barreaux dans les trous (3) des longerons, conformés à cet effet de manière à présenter des crans (33) adaptés pour s'engager avec des encoches (24) réalisées sur les extrémités (21) des barreaux (2).

4. Dispositif selon la revendication 3, **caractérisé en ce que** les extrémités (21) des barreaux (2) comportent une fente (22) selon une direction axiale.

5. Dispositif selon la revendication 1, **caractérisé en ce que** les longerons (1) comprennent une âme qui comporte des éléments de renfort (13, 14, 15) ménageant entre eux des zones de voile mince (161) évidables ou des zones évidées (16, 3).

6. Dispositif selon la revendication 5, **caractérisé en ce que** l'âme des longerons est située entre deux semelles (11,12) reliées par les éléments de renfort (13,14).

7. Dispositif selon la revendication 5, **caractérisé en ce que** les longerons (1) sont moulés par compression de feuilles ou bandes préfabriquées en matière plastique renforcée de fibres.

8. Dispositif selon la revendication 1 ou la revendication 7, **caractérisé en ce que** les zones de voile mince (161) et/ou les trous (3) sont formés lors du moulage.

9. Dispositif selon la revendication 6, **caractérisé en ce que** les extrémités des longerons (1) sont conformées directement par moulage pour présenter des moyens d'éclissage (4) permettant l'assemblage des longerons bout à bout.

10. Dispositif selon la revendication 9, **caractérisé en ce que** les moyens d'éclissage comprennent une patte d'éclissage (4a) prolongeant l'âme du longeron au-delà de l'extrémité des semelles, et agencée pour s'insérer entre les semelles (11, 12) et contre la patte d'éclissage (4b) d'un longeron adjacent.

11. Dispositif selon la revendication 10, **caractérisé en ce que** chaque patte d'éclissage (4) comporte au moins un bossage (41) et/ou une lumière oblongue (42), le bossage (41) de la patte d'un longeron étant agencé pour s'insérer dans la lumière (42) de la patte d'éclissage du longeron adjacent, avec un jeu longitudinal autorisant un déplacement longitudinal relatif des longerons.

12. Dispositif selon la revendication 11, **caractérisé en ce que** la hauteur du bossage (41) est légèrement supérieure à l'épaisseur de la patte (4), et un boulon (43) passant dans un trou (44) réalisé dans le bossage (41) est serré sur ce dernier, laissant une possibilité de coulissement du bossage dans la lumière.

13. Dispositif selon la revendication 10, **caractérisé en ce que** les pattes (4) comportent des repères de positionnement, un repère en relief (46) d'une patte d'un longeron étant agencé pour s'engager avec un repère en creux (47) prévus sur la patte de l'autre longeron.

## Claims

1. Device for supporting cables or conduits, including two parallel longitudinal members (1) connected by bars (2), **characterised in that** the longitudinal members (1) are made of moulded composite material and include openings (3) into which the ends (21) of the bars (2) are inserted and are locked by elastic deformation of said ends.

2. Device according to claim 1, **characterised in that** the bars (2) are made of thermosetting composite material reinforced with fibres.

3. Device according to claim 1, **characterised in that** the bars (2) are retained on the longitudinal members (1) by clipping the ends (21) of the bars into the openings (3) in the longitudinal members, which are shaped for this purpose so as to have catches (33) adapted to engage with notches (24) formed in the ends (21) of the bars (2).

4. Device according to claim 3, **characterised in that** the ends (21) of the bars (2) each include a slot (22) lying in an axial direction.

5. Device according to claim 1, **characterised in that** the longitudinal members (1) each comprise a web which includes reinforcing elements (13, 14, 15) which between them form thin wall areas (161) which can be hollowed out, or areas which are already hollowed out (16, 3).

6. Device according to claim 5, **characterised in that** the web of each longitudinal member is located between two flanges (11, 12) connected by the reinforcing elements (13, 14).

7. Device according to claim 5, **characterised in that** the longitudinal members (1) are press-moulded from prefabricated sheets or strips of plastic material reinforced with fibres.

8. Device according to claim 1 or claim 7, **characterised in that** the thin wall areas (161) and/or the openings (3) are formed during moulding.

9. Device according to claim 6, **characterised in that** the ends of the longitudinal members (1) are shaped directly by moulding so as to have fishplate means (4) for assembling the longitudinal members end to end.

10. Device according to claim 9, **characterised in that** the fishplate means comprise a fishplate tongue (4a) which extends the web of the longitudinal member beyond the ends of the flanges and which is arranged for insertion between the flanges (11, 12) and against the fishplate tongue (4b) of an adjacent longitudinal member.

11. Device according to claim 10, **characterised in that** each fishplate tongue (4) includes at least one boss (41) and/or an oblong aperture (42), the boss (41) of the tongue of one longitudinal member being arranged for insertion into the aperture (42) of the fishplate tongue of the adjacent longitudinal member, with sufficient longitudinal play to allow a relative longitudinal displacement of the longitudinal members.

12. Device according to claim 11, **characterised in that** the height of the boss (41) is slightly greater than the thickness of the tongue (4), and a bolt (43) passing into an opening (44) formed in the boss (41) is tightened on to the latter, while still allowing the boss to slide in the aperture.

13. Device according to claim 10, **characterised in that** the tongues (4) include reference points for positioning, a projecting reference point (46) on a tongue of one longitudinal member being arranged for engagement with a recessed reference point (47) provided on the tongue of the other longitudinal member.

## Patentansprüche

1. Tragvorrichtung für Kabel oder Leitungen, zwei parallele Längsträger (1) aufweisend, die durch Stäbe (2) miteinander verbunden sind, **dadurch gekennzeichnet, dass** die Längsträger (1) aus geformtem Verbundwerkstoff bestehen und Löcher (3) aufweisen, in die die Enden (21) der Stäbe (2) eingesteckt und durch elastische Verformung der genannten Enden verriegelt sind.

2. Vorrichtung nach Patentanspruch 1, **dadurch gekennzeichnet, dass** die Stäbe (2) aus faserverstärktem, warmaushärtendem Verbundwerkstoff bestehen.

3. Vorrichtung nach Patentanspruch 1, **dadurch gekennzeichnet, dass** die Befestigung der Stäbe (2) an den Längsträgern (1) durch Einschnappen der Enden (21) der Stäbe in den Löchern (3) der Längsträger erfolgt, die zu diesem Zweck derart ausgebildet sind, dass sie Rastkerben (33) aufweisen, die dafür ausgelegt sind, mit Kerben (24) in Eingriff zu treten, die an den Enden (21) der Stäbe (2) ausgebildet sind.

4. Vorrichtung nach Patentanspruch 3, **dadurch gekennzeichnet, dass** die Enden (21) der Stäbe (2) einen Schlitz (22) in Achsenrichtung aufweisen.

5. Vorrichtung nach Patentanspruch 1, **dadurch gekennzeichnet, dass** die Längsträger (1) einen Kern umfassen, der Verstärkungselemente (13, 14, 15) umfasst, die zwischeneinander dünnwandige, ausbrechbare Bereiche (161) aussparen oder durchbrochene Bereiche (16, 3).

6. Vorrichtung nach Patentanspruch 5, **dadurch gekennzeichnet, dass** sich der Kern der Längsträger zwischen zwei Sohlen (11, 12) befindet, die durch die Verstärkungselemente (13, 14) miteinander verbunden sind.

7. Vorrichtung nach Patentanspruch 5, **dadurch gekennzeichnet, dass** die Längsträger (1) durch Zusammenpressen vorgefertigter Folien oder Streifen aus faserverstärktem Kunststoff geformt werden.

8. Vorrichtung nach Patentanspruch 1 oder Patentanspruch 7, **dadurch gekennzeichnet, dass** die dünnwandigen Bereiche (161) und/oder die Löcher (3) beim Formen ausgebildet werden.

9. Vorrichtung nach Patentanspruch 6, **dadurch gekennzeichnet, dass** die Enden der Längsträger (1) direkt durch Formen derart ausgebildet werden, dass sie Verlaschungsmittel (4) aufweisen, die die Verbindung der Längsträger miteinander an ihren Enden erlauben.

10. Vorrichtung nach Patentanspruch 9, **dadurch gekennzeichnet, dass** die Verlaschungsmittel einen Verlaschungslappen (4a) umfassen, der den Kern des Längsträgers über das Ende der Sohlen hinaus verlängert und derart angeordnet ist, dass er sich zwischen die Sohlen (11, 12) einfügt und an den Verlaschungslappen (4b) eines anschließenden Längsträgers anlegt.

11. Vorrichtung nach Patentanspruch 10, **dadurch gekennzeichnet, dass** jeder Verlaschungslappen (4) mindestens einen Vorsprung (41) und/oder eine längliche Öffnung (42) aufweist, wobei der Vorsprung (41) des Lappens eines Längsträgers dafür ausgelegt ist, in die Öffnung (42) des Verlaschungslappens des anschließenden Längsträgers mit einem Spiel in Längsrichtung einzutreten, das eine Längsverschiebung der Längsträger gegeneinander erlaubt.

12. Vorrichtung nach Patentanspruch 11, **dadurch gekennzeichnet, dass** die Höhe des Vorsprungs (41) geringfügig größer ist, als die Dicke des Lappens (4), und ein Bolzen (43), der durch ein Loch (44) gesteckt wird, das im Vorsprung (41) ausgebildet ist, gegen diesen festgezogen wird und dabei die Möglichkeit des Gleitens des Vorsprungs in der Öffnung belässt.

13. Vorrichtung nach Patentanspruch 10, **dadurch gekennzeichnet, dass** die Lappen (4) Positionierungsmarkierungen tragen, wobei eine erhabene Markierung (46) eines Lappens eines Längsträgers dafür ausgelegt ist, mit einer vertieften Markierung (47) in Eingriff zu treten, die im Lappen des anderen Längsträgers vorgesehen ist.
